# EUROPÄISCHE PATENTANMELDUNG

(11) **EP 2 025 772 A1**
(43) Veröffentlichungstag der Anmeldung: **18.02.2009**
(21) Anmeldenummer: 08157153.1
(22) Anmeldetag: 29.05.2008
(51) Int. Cl.: C23C 4/18

(54) **Verfahren zum Herstellen einer funktionalen Schicht**

(30) Priorität: 16.08.2007 EP 07114429
(71) Anmelder: Sulzer Metco AG, 5610 Wohlen (CH)
(72) Erfinder: Damani, Rajiv J., Dr., 8404 Winterthur (CH); Refke, Arno, Dr., 5507 Mellingen (CH); von Niessen, Konstantin, Dr., 5632 Buttwil (CH)
(74) Vertreter: Sulzer Management AG

(57) **Zusammenfassung**

Es wird ein Verfahren zum Herstellen einer funktionalen Schicht vorgeschlagen, bei welchem in einem ersten Schritt mittels eines Plasmaspritzverfahrens ein Beschichtungsmaterial in Form eines Pulverstrahls auf eine Oberfläche eines Substrats (2) aufgespritzt wird, wobei das Beschichtungsmaterial bei einem niedrigen Prozessdruck, der kleiner als 10 000 Pa ist, in ein den Pulverstrahl defokussierendes Plasma injiziert und dort teilweise oder vollständig geschmolzen wird, wobei ein Plasma mit ausreichend hoher spezifischer Enthalpie erzeugt wird, sodass ein substanzieller, mindestens 5 Gew-% betragender Anteil des Beschichtungsmaterials in die Dampfphase übergeht und auf dem Substrat eine anisotrop strukturierte Schicht (1) entsteht, wobei längliche Korpuskeln (10), die eine anisotrope Mikrostruktur bilden, weitgehend senkrecht zur Oberfläche des Substrats (2) stehend ausgerichtet sind und materialarme Übergangsbereiche (11, 12) die Korpuskeln gegeneinander begrenzen. In einem zweiten Schritt werden zum verstärken der Schicht Kapillarräume (11,12) der Schicht (1) gefüllt, wobei als Verstärkungsmittel (6) eine Flüssigkeit verwendet wird, die mindestens ein darin enthaltenes Salz eines Metalls (Me) umfasst, das thermisch in ein Metalloxid umwandelbar ist, wobei das Verstärkungsmittel (6) auf die Oberfläche der Schicht (1) aufgetragen wird, und - nach Abwarten einer Penetration in die Kapillarräume - ein Wärmeeintrag erfolgt zur Bildung eines Oxids

## Beschreibung

Die Erfindung betrifft ein Verfahren zum Herstellen einer funktionalen Schicht sowie ein Bauteil mit einer solchen Schicht gemäss dem Oberbegriff des unabhängigen Anspruchs der jeweiligen Kategorie.

Das erfindungsgemässe Verfahren umfasst als ersten Schritt ein Plasmaspritzverfahren, welches gattungsgemäss in der WO-A-03/087422 oder auch in der US-A- 5 853 815 beschrieben ist. Dieses Plasmaspritzverfahren ist ein thermisches Spritzen zur Herstellung eines sogenannten LPPS-Dünnfilms (LPPS = Low Pressure Plasma Spraying). Die Erfindung bezieht sich auch auf eine Weiterentwicklung des Verfahrens und auf Bauteile, die nach dem erfindungsgemässen Verfahren beschichtet sind.

Mit dem LPPS-Dünnfilm-Prozess (LPPS-TF = LPPS Thin Film) wird ein konventionelles LPPS-Plasmaspritzverfahren verfahrenstechnisch abgewandelt, wobei ein von Plasma durchströmter Raum ("Plasmaflamme" oder "Plasmastrahl") aufgrund der Änderungen ausgeweitet und auf eine Länge von bis zu 2.5 m ausgedehnt wird. Die geometrische Ausdehnung des Plasmas führt zu einer gleichmässigen Aufweitung - einer "Defokussierung" - eines Pulverstrahls, der mit einem Fördergas in das Plasma injiziert wird. Das Material des Pulverstrahls, das im Plasma zu einer Wolke dispergiert und dort teilweise oder vollständig geschmolzen wird, gelangt gleichmässig verteilt auf eine weit ausgedehnte Oberfläche eines Substrats. Es entsteht auf dem Substrat eine dünne Lage, deren Schichtdicke kleiner als 10 µm sein kann und die dank der gleichmässigen Verteilung eine dichte Abdeckung bildet.

Durch mehrfachen Auftrag von dünnen Lagen kann eine dickere Beschichtung mit besonderen Eigenschaften hergestellt werden, was eine solche Beschichtung als Funktionsschicht verwendbar macht. Beispielsweise ist mit einem Mehrfachauftrag eine poröse Beschichtung herstellbar, die sich als Träger für katalytisch aktive Stoffe eignet (siehe EP-A- 1 034 843 = P.6947).

Eine Funktionsschicht, die auf einen das Substrat bildenden Grundkörper aufgebracht wird, umfasst in der Regel verschiedene Teilschichten. Beispielsweise werden für eine Gasturbine (stationäre Gasturbine oder Flugzeugtriebwerk), die bei hohen Prozesstemperaturen betrieben wird, die Schaufeln mit einer ersten ein- oder mehrlagigen Teilschicht beschichtet, die eine Beständigkeit gegen Heissgaskorrosion herstellt. Eine zweite Beschichtung, die auf die erste Teilschicht aufgebracht wird und für die keramisches Material verwendet wird, bildet eine Wärmedämmschicht. Das LPPS-Plasmaspritzverfahren eignet sich für die Herstellung der ersten Schicht. Die Wärmedämmschicht wird vorteilhafterweise mit einem Verfahren erzeugt, bei dem eine Beschichtung mit einer kolumnaren Mikrostruktur entsteht. Die so strukturierte Schicht setzt sich angenähert aus zylindrischen Körperchen oder Korpuskeln zusammen, deren Zentralachsen senkrecht zur Substratoberfläche ausgerichtet sind. Übergangsbereiche, in denen die Dichte des abgeschiedenen Materials kleiner als in den Korpuskeln ist, begrenzen die Korpuskeln seitlich. Eine Beschichtung, die solcherart eine anisotrope Mikrostruktur aufweist, ist nachgiebiger gegenüber wechselnden Spannungen, die sich aufgrund von wiederholt auftretenden Temperaturänderungen ergeben. Die Beschichtung reagiert auf die wechselnden Spannungen auf eine weitgehend reversible Weise, d.h. ohne eine Ausbildung von Rissen oder einem Abplatzen von Material, so dass ihre Lebensdauer beträchtlich verlängert ist im Vergleich mit der Lebensdauer einer üblichen Beschichtung, die keine kolumnare Mikrostruktur hat.

Die anisotrope Mikrostruktur ist mit einem Dünnfilmverfahren erzeugbar, das ein Aufdampfverfahren ist. Bei diesem Verfahren, das man mit "EB-PVD" (Electron Beam - Physical Vapor Deposition) bezeichnet, wird die für die Wärmedämmschicht abzuscheidende Substanz in einem Hochvakuum mit einem Elektronenstrahl in die Dampfphase gebracht und aus dieser auf den zu beschichtenden Bauteil auskondensiert. Werden die Prozessparameter geeignet gewählt, so ergibt sich eine kolumnare Mikrostruktur. Ein Nachteil dieses Aufdampfverfahrens sind hohe Anlagenkosten. Es kommt hinzu, dass bei der Herstellung einer mehrere Teilschichten umfassenden Beschichtung nicht die gleiche Anlage für das LPPS-Plasmaspritzverfahren und den EB-PVD-Prozess eingesetzt werden kann. Für die Beschichtung sind daher mehrere Arbeitszyklen durchzuführen.

Aus der bereits erwähnten WO-A-03/087422 ist es bekannt, dass solche anisotrope Mikrostrukturen mit länglichen Korpuskeln, die weitgehend senkrecht zur Substratoberfläche stehend ausgerichtet sind und durch materialarme Übergangsbereiche gegeneinander begrenzt sind, die mithin eine kolumnare Struktur aufweisen, auch mittels des LPPS-TF-Verfahrens herstellbar sind.

Wärmedämmschichten mit kolumnarer Mikrostruktur werden insbesondere auch bei Flugzeugtriebwerken, beispielsweise als Wärmeschutzschicht auf den Turbinenschaufeln der Leiträder und der Laufräder verwendet und sind dort oft extremen Betriebsbedingungen ausgesetzt. Neben den hohen thermischen Belastungen hat es sich gezeigt, dass auch Erosion zu einer Degradation dieser Wärmeschutzschichten führt. Beispielsweise beim Einsatz in Wüstengebieten, wo die Luft einen hohen Anteil an Sandpartikeln aufweisen kann, lassen sich erhebliche Verschleisserscheinungen beobachten, die auf Erosion beruhen.

Es ist daher eine Aufgabe der Erfindung, ein Verfahren zum Herstellen einer funktionalen Schicht vorzuschlagen, mit dem eine Wärmedämmschicht herstellbar ist, die eine anisotrope kolumnare Mikrostruktur aufweist und eine erhöhte Beständigkeit gegenüber Erosion zeigt. Ferner soll durch die Erfindung ein Bauteil mit einer solchen Schicht vorgeschlagen werden.

Die diese Aufgabe lösenden Gegenstände der Erfindung sind durch die unabhängigen Ansprüche der jeweiligen Kategorie gekennzeichnet.

Erfindungsgemäss wird also ein Verfahren zum Herstellen einer funktionalen Schicht vorgeschlagen, bei welchem in einem ersten Schritt mittels eines Plasmaspritzverfahrens ein Beschichtungsmaterial in Form eines Pulverstrahls auf eine Oberfläche eines Substrats aufgespritzt wird, wobei das Beschichtungsmaterial bei einem niedrigen Prozessdruck, der kleiner als 10 000 Pa ist, in ein den Pulverstrahl defokussierendes Plasma injiziert und dort teilweise oder vollständig geschmolzen wird, wobei ein Plasma mit ausreichend hoher spezifischer Enthalpie erzeugt wird, sodass ein substanzieller, mindestens 5 Gew-% betragender Anteil des Beschichtungsmaterials in die Dampfphase übergeht und auf dem Substrat eine anisotrop strukturierte Schicht entsteht, wobei längliche Korpuskeln, die eine anisotrope Mikrostruktur bilden, weitgehend senkrecht zur Oberfläche des Substrats stehend ausgerichtet sind und materialarme Übergangsbereiche die Korpuskeln gegeneinander begrenzen. In einem zweiten Schritt werden zum Verstärken der Schicht Kapillarräume der Schicht gefüllt, wobei als Verstärkungsmittel eine Flüssigkeit verwendet wird, die mindestens ein darin enthaltenes Salz eines Metalls (Me) umfasst, das thermisch in ein Metalloxid umwandelbar ist, wobei das Verstärkungsmittel auf die Oberfläche der Schicht aufgetragen wird, und - nach Abwarten einer Penetration in die Kapillarräume - ein Wärmeeintrag erfolgt zur Bildung eines Oxids.

Zunächst wird also in einem ersten Schritt mittels eines LPPS-TF (Low Pressure Plasma Spraying Thin Film) -Verfahrens eine anisotrop strukturierte kolumnare Schicht auf dem Substrat generiert, die dann anschliessend in einem zweiten Schritt verstärkt oder imprägniert wird, indem eine Flüssigkeit mit einem Metallsalz auf die Oberfläche aufgebracht wird und dann durch Wärmeeintrag ein Oxid gebildet wird. Überraschenderweise hat sich gezeigt, dass sich durch den zweiten Verfahrensschritt, nämlich das Verstärken der LPPS-TF-Schicht die Erosionsbeständigkeit der Schicht deutlich verbessert. Vergleichsversuche haben gezeigt, dass durch das Verstärken bzw. das Imprägnieren beispielsweise eine um das Siebenfache bessere Erosionsbeständigkeit erzielbar ist.

Als besonders vorteilhaft hat es sich erwiesen, wenn der zweite Schritt, nämlich das Auftragen des Verstärkungsmittels und der Wärmeeintrag zur Bildung des Oxids mehrmals, insbesondere dreimal, durchgeführt wird.

Unter praktischen Aspekten ist es bevorzugt, wenn das Verstärkungsmittel eine wässrige Lösung ist, die ein Salz des oxidierbaren Metalls (Me) gelöst enthält, und das Metallsalz mit Vorzug ein Nitrat oder Acetat der Metalle Co, Mn, Mg, Ca, Sr, Y, Zr, Al, Ti, Ni, La, Sc und/oder eines Lanthanids ist, insbesondere eines der Lanthanide Ce, Eu, Yb, Nd, Dy oder Gd. Vorzugsweise ist das Metall ein solches, das auch in keramischer oder oxidischer Form in der plasmagespritzen Schicht enthalten ist. Auch kann es vorteilhaft sein, wenn das oxidierte Metall in Wasser unlöslich ist.

Natürlich kann das Verstärkungsmittel auch die Salze mehrerer oxidierbarer Metalle enthalten. Die Wahl des Verstärkungsmittels bzw. seiner Zusammensetzung richtet sich nach dem für das Plasmaspritzen verwendeten Beschichtungsmaterials.

Für den Wärmeeintrag zur Bildung des Oxids erfolgt die Wärmezufuhr bevorzugt in einem thermischen Ofen, in einem Mikrowellenofen, mit einem Wärmestrahler, insbesondere einem Karbonstrahler mit einem Wellenlängenbereich von 2 - 3.5 µm, und/oder mit einer Flamme.

Je nach Anwendungsfall kann es vorteilhaft sein, dass die Wärmezufuhr in einer inerten Atmosphäre oder im Vakuum durchgeführt wird. Zur Realisierung einer inerten Atmosphäre kann prinzipiell jedes an sich bekannte Schutzgas, beispielsweise Argon, verwendet werden.

In einer für die Praxis besonders relevanten Ausführungsform ist die anisotrop strukturierte Schicht eine Wärmedämmschicht, die beispielsweise in einer Gasturbine zur Anwendung kommt, und deren Schichtdicke Werte zwischen 20 und 2000 µm, vorzugsweise Werte von 100 µm bis 500 µm aufweist.

Die Praxis hat gezeigt, dass es besonders vorteilhaft ist, wenn in dem Plasmaspritzverfahren:
a) für den Prozessdruck ein Wert zwischen 20 und 2000 Pa, vorzugsweise zwischen 100 und 500 Pa, gewählt wird und die spezifische Enthalpie des Plasmas durch Abgabe einer effektiven Leistung erzeugt wird, die insbesondere im Bereich von 40 bis 80 kW liegt,
b) der Pulverstrahl in das Plasma mit einem Fördergas injiziert wird, das Prozessgas ein Gemisch von Inertgasen ist, insbesondere ein Gemisch von Argon Ar und Helium He, wobei das Volumenverhältnis von Ar zu He vorteilhafterweise im Bereich von 2 : 1 bis 1 : 4 liegt, und der Gesamtgasfluss im Bereich von 30 bis 150 SLPM liegt, wobei optional das Gemisch zusätzlich Wasswestoff H oder Stickstoff N enthalten kann
c) die Pulverförderrate zwischen 2 und 80 g/min, vorzugsweise zwischen 10 und 40 g/min liegt, und
d) vorzugsweise das Substrat während des Materialauftrags mit Dreh- oder Schwenkbewegungen relativ zu einer Wolke des defokussierten Pulverstrahls bewegt wird.

Insbesondere zur Erzeugung von Wärmedämmschichten wird zur Beschichtung vorzugsweise ein Material verwendet, das oxidkeramische Komponenten enthält, wobei eine solche Komponente insbesondere ein mit Magnesium, Calcium, Scandium, Yttrium, Cerium, Dysprosium oder anderen Seltenen Erden stabilisiertes Zirkoniumoxid ist und der als Stabilisator verwendete Stoff in Form eines Oxids der genannten Seltenen Erden oder des genannten Magnesiums oder des genannten Calciums dem Zirkoniumoxid beigefügt ist. Dieses Beifügen kann insbesondere auch durch Zulegieren erfolgen.

Je nach Anwendungsfall kann es vorteilhaft sein, wenn nach dem einmaligen oder mehrmaligen Durchführen des zweiten Schritts eine Wärmebehandlung zum Sintern erfolgt, die vorzugsweise bei mindestens 800°C erfolgt. Es hat sich gezeigt, dass eine solche Behandlung über einen ausreichend langen Zeitraum von beispielsweise mindestens 10 Stunden bei mindestens 800°C, insbesondere bei 1000°C-1200°C erfolgen sollte, um eine möglichst gute Erosionsbeständigkeit zu erzielen. Es ist aber auch möglich, dass diese Wärmebehandlung zum Sintern nicht als separater Schritt durchgeführt wird, sondern nach Inbetriebnahme des Bauteils im normalen Betrieb durch die Betreibstemperatur realisiert wird.

Das Verfahren ist insbesondere geeignet für die Beschichtung, speziell die Wärmeschutzbeschichtung von Komponenten in Turbinen, stationären Gasturbinen oder Flugtriebwerken, wenn also das Substrat eine Komponente einer stationären Gasturbine oder eines Flugtriebwerks ist, nämlich eine Turbinenschaufel, insbesondere eine Leit- oder Laufschaufel, oder ein Segment, welches mindestens zwei Turbinenschaufeln umfasst oder eine heissgasbeaufschlagbare Komponente, beispielsweise ein Hitzeschild.

Durch die Erfindung wird ferner ein Bauteil mit einer funktionalen Schicht vorgeschlagen, wobei die Schicht mit einem erfindungsgemässen Verfahren hergestellt ist. Insbesondere ist das Bauteil eine Komponente einer stationären Gasturbine oder eines Flugtriebwerks, nämlich eine Turbinenschaufel, insbesondere eine Leit- oder Laufschaufel, oder ein Segment, welches mindestens zwei Turbinenschaufeln umfasst oder eine heissgasbeaufschlagbare Komponente, beispielsweise ein Hitzeschild

Das erfindungsgemässe Verfahren weist gegenüber dem bekannten Verfahren, mit dem eine kolumnar strukturierte Schicht mittels EB-PVD hergestellt wird, einen weiteren Vorteil auf: Die Prozesszeiten für gleich dicke Schichten sind deutlich kürzer.

Weitere vorteilhafte Massnahmen und bevorzugte Ausgestaltungen der Erfindung ergeben sich aus den abhängigen Ansprüchen.

Im Folgenden wird die Erfindung anhand von Ausführungsbeispielen und anhand der Zeichnung näher erläutert. In der schematischen Zeichnung zeigen teilweise im Schnitt:
- Fig. 1: eine anisotrop strukturierte, nach einem Ausführungsbeispiel des erfindungsgemässen Verfahrens hergestellte Schicht, in einer schematischen Darstellung,
- Fig. 2: eine schematische Darstellung eines Schichtsystems mit einer Wärmedämmschicht, die nach einem Ausführungsbeispiel des erfindungsgemässen Verfahrens hergestelltist,
- Fig. 3: ein Segment einer Turbine mit zwei Turbinenschaufeln,
- Fig. 4: einen Schnitt durch das Segment in Fig. 3 parallel zur Grundplatte, und

- Fig. 5: eine schematische Darstellung zweier länglicher Korpuskel der anisotropen Mikrostruktur.

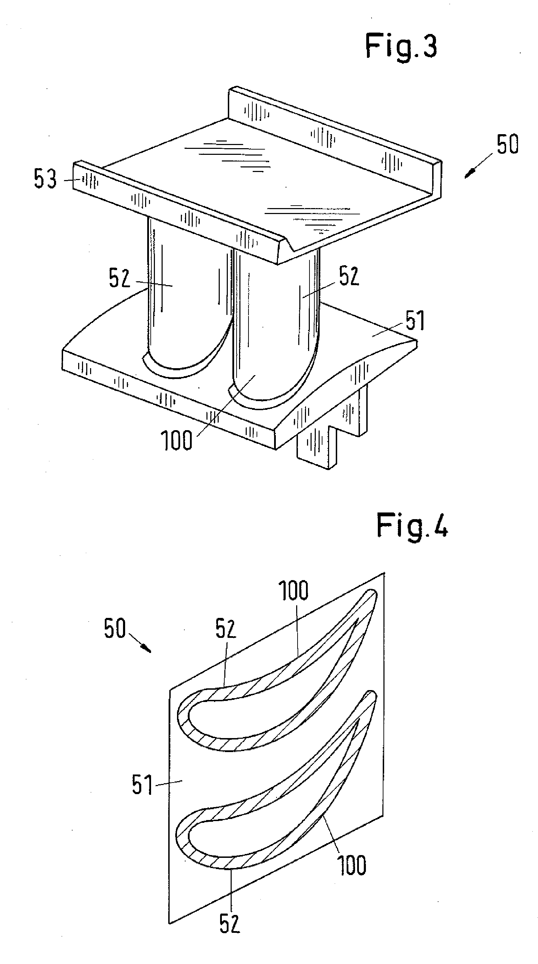

Im Folgenden wird auf das für die Praxis besonders relevante Anwendungsbeispiel Bezug genommen, dass auf einer im Hochtemperaturbereich eingesetzten Turbinenschaufel bzw. auf einem Segment, das mehrere Turbinenschaufeln umfasst (siehe Fig. 3 und Fig. 4), eine Wärmedämmschicht mit kolumnarer Struktur als funktionale Schicht vorgesehen wird. Solche Wärmedämmschichten werden auch als TBC-Schichten bezeichnet (TBC = Thermal Barrier Coating).

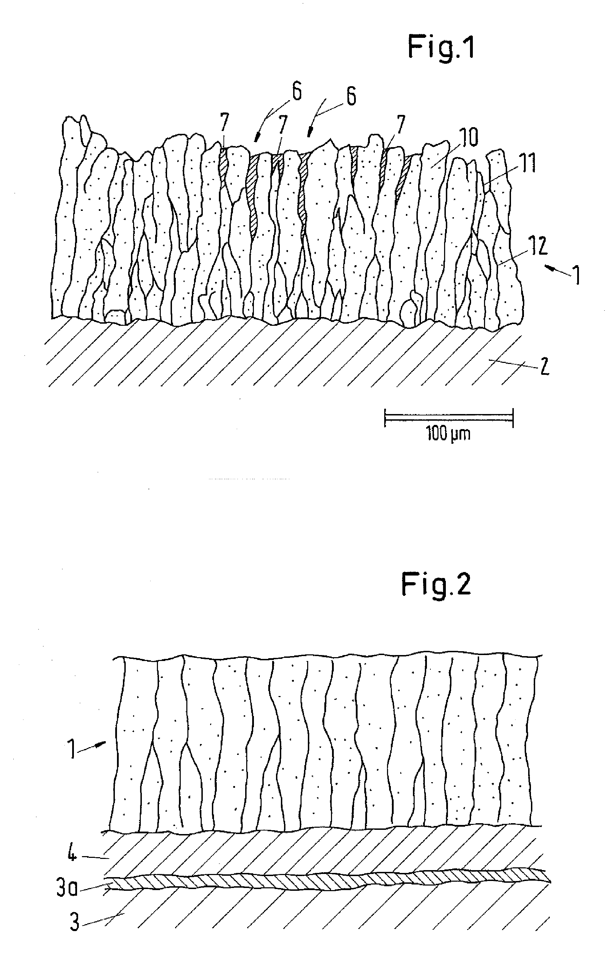

Das erfindungsgemässe Verfahren zum Herstellen einer funktionalen Schicht 1 (Fig. 1) umfasst zwei Schritte: Zunächst wird in einem ersten Schritt mittels eines Plasmaspritzverfahrens, das ein LPPS-Verfahren ist, auf einem Substrat 2 eine anisotrop strukturierte Schicht generiert, anschliessend wird diese Schicht 1 in einem zweiten Schritt verstärkt.

In Fig. 1 ist ein Schnitt durch eine nach einem Ausführungsbeispiel des erfindungsgemässen Verfahrens hergestellte Schicht 1 dargestellt. Die im ersten Schritt mit dem LPPS-TF-Prozess auf ein Substrat 2 abgelagerte Schicht 1 ist anisotrop strukturiert und hat eine Schichtdicke von rund 150 µm. Die anisotrope Mikrostruktur wird durch längliche Korpuskeln 10 gebildet, die weitgehend senkrecht zur Substratoberfläche stehen. Materialarme Übergangsbereiche 12, die als Linien gezeichnet sind, und spaltförmige Zwischenräume 11, begrenzen die Korpuskeln 10. Die Übergangsbereiche 12 und die spaltförmigen Zwischenräume 11 werden unter den Begriff Kapillarräume subsumiert. Die Kapillarräume können ferner als Poren und Risse ausgestaltet sein. Durch den zweiten Verfahrensschritt erfolgt eine Verstärkung der Schicht 1, bei welcher ein Verstärkungsmittel - angedeutet durch die mit dem Bezugszeichen 6 versehenen Pfeile in Fig. 1 - auf die Schicht 1 aufgebracht wird, in die Kapillarräume 11,12 eindringt und anschliessend durch Wärmeeintrag in ein Metalloxid 7 umgewandelt wird. Die Darstellung des in den Kapillarräumen 11,12 eingelagerten Metalloxids 7 in Fig. 1 ist sehr schematisch.

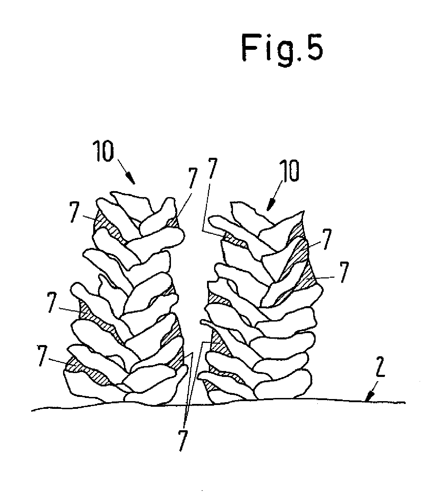

Zum besseren Verständnis zeigt Fig. 5 in einer schematischen Darstellung zwei längliche Korpuskel 10 der anisotropen Mikrostruktur. Die einzelnen länglichen Korpuskel 10 erinnern von ihrer Struktur an Federn, denn sie weisen zerfranste Randbereiche aus. Auch diese Poren oder Zwischenräume in den Randbereichen der einzelnen Korpuskel 10 sind mit dem Begriff der Kapillarräume gemeint bzw. sollen von diesem Begriff umfasst sein. In dem zweiten Schritt des erfindungsgemässen Verfahrens dringt das Verstärkungsmittel auch in diese Kapillarräume im Randbereich der einzelnen Korpuskel 10 ein, sodass es auch dort beim Wärmeeintrag zur Bildung des Oxids kommt, wie dies sehr schematisch in Fig. 5 durch die schraffierten Bereiche 7 dargestellt ist.

Natürlich befindet sich auch zwischen den beiden Korpuskeln 10 in Fig. 5 das Verstärkungsmittel bzw. das Oxid. Hier wurde jedoch auf dessen Darstellung aufgrund der besseren Übersicht verzichtet. Zudem ist in Fig. 5 der Abstand der einzelnen Korpuskel 10 übertrieben dargestellt. Üblicherweise sind die Korpuskel 10 näher beisamen. Sie können über ihre individuellen Randbereiche miteinander verzahnt sein, so wie dies bei dicht bebeneinander stehend angeordneten Vogelfedern der Fall wäre.

Zunächst wird nun der erste Verfahrensschritt, nämlich das Erzeugen der Wärmedämmschicht 1 mittels LPPS-TF näher erläutert.

Als Beschichtungsmaterial ist in diesem Beispiel Zirkoniumoxid, das mit Yttrium Y stabilisiert ist, verwendet worden, nämlich ZrO₂-8%Y₂O₃. Das Substrat 2 kann entweder eine Haftvermittlungsschicht oder eine Schutzschicht gegen Korrosion oder aber auch ein Grundkörper sein.

Damit die anisotrope Mikrostruktur entsteht, muss ein Plasma mit ausreichend hoher spezifischer Enthalpie erzeugt werden, sodass ein substanzieller, mindestens 5 Gew-% betragender Anteil des Beschichtungsmaterials in die Dampfphase übergeht. Der Anteil des verdampften Materials, das nicht vollständig in die Dampfphase übergehen darf, kann bis zu 70 % betragen. Das Plasma wird in einem Brenner mit einem elektrischen Gleichstrom und mittels einer Stiftkatode sowie einer ringförmigen Anode erzeugt. Die dem Plasma zugeführte Leistung, die effektive Leistung, kann empirisch bezüglich der resultierenden Schichtstruktur ermittelt bzw. eingestellt werden. Die effektive Leistung, die durch die Differenz zwischen der elektrischen Leistung und der durch Kühlung abgeführten Wärme gegeben ist, liegt erfahrungsgemäss im Bereich von 40 bis 80 kW.

Für den Prozessdruck des LPPS-TF-Plasmaspritzverfahrens wird ein Wert zwischen 20 und 2000 Pa gewählt, vorzugsweise zwischen 100 und 500 Pa. Ein Pulverstrahl wird mit einem Fördergas in das Plasma injiziert. Das Prozessgas für die Erzeugung des Plasmas ist ein Gemisch von Inertgasen, insbesondere eine Gemisch von Argon Ar und Helium He, wobei das Volumenverhältnis von Ar zu He vorteilhafterweise im Bereich von 2 : 1 bis 1 : 4 liegt. Der Gesamtgasfluss liegt im Bereich von 30 bis 150 SLPM (Standard Liter Per Minute). Optional kann dem Gemisch zusätzlich Wasserstoff und/oder Stickstoff beigemischt werden, beispielsweise um eine höhere elektrische Leistung im Plasma zu realisieren. Die Pulverförderrate liegt zwischen 2 und 80 g/min, vorzugsweise zwischen 10 und 40 g/min. Der Pulverstrahl wird im defokussierenden Plasma zu einer Wolke aus Dampf und Partikeln umgeformt. Vorzugsweise wird das Substrat während des Materialauftrags mit Dreh- oder Schwenkbewegungen relativ zu dieser Wolke bewegt. Natürlich ist es auch möglich, den Plasmabrenner relativ zum Substrat 2 zu bewegen. Dabei wird die Wärmedämmschicht durch Abscheiden einer Mehrzahl von Lagen aufgebaut. Die gesamte Schichtdicke weist Werte zwischen 20 und 2000 µm, vorzugsweise Werte von 100 µm bis 500 µm auf.

Zur Herstellung einer Wärmedämmschicht nach dem LPPS-TF-Verfahren eignet sich ein oxidkeramisches Material oder ein Material, das oxidkeramische Komponenten enthält, wobei das oxidkeramische Material insbesondere ein mit Selten Erden oder mit Magnesium oder mit Calcium stabilisiertes Zirkoniumoxid ist. Der als Stabilisator verwendete Stoff wird in Form eines Oxids der Selten Erden, beispielsweise, Yttrium Y, Cer Ce, Dysprosium Dy oder Scandium Sc, oder von Magnesium oder von Calcium dem Zirkoniumoxid zulegiert, wobei für das Beispiel von Y das Oxid einen Anteil von 5 bis 20 Gew-% bildet.

Damit der Pulverstrahl durch das defokussierende Plasma in eine Wolke aus Dampf und Partikeln umgeformt wird, aus der sich eine Schicht 1 mit der angestrebten Mikrostruktur ergibt, muss das pulverförmige Ausgangsmaterial sehr feinkörnig sein. Die Grössenverteilung der Pulverpartikel wird mittels einer Laserstreumethode bestimmt. Für diese Grössenverteilung muss gelten, dass sie zu einem wesentlichen Teil im Bereich zwischen 1 und 50 µm, vorzugsweise zwischen 3 und 25 µm liegt. Zur Herstellung der Pulverpartikel können verschiedene Verfahren angewendet werden: beispielsweise Sprühtrocknen oder eine Kombination von Aufschmelzen und anschliessendem Brechen und/oder Mahlen der erstarrten Schmelze.

Bei der in Fig. 1 dargestellten Schicht, die eine gut ausgebildete kolumnare Mikrostruktur zeigt, sind für die Prozessparameter folgende Werte verwendet worden: Prozessdruck = 150 Pa; Prozessgas: Ar, 35 SLPM, und He, 60 SLPM; Pulverförderung: Pulverförderrate = 20 g/min; Spritzabstand = 900 mm.

Bei einer Erhöhung der Förderrate auf beispielsweise 40 - 50 g/min, und ohne dass die anderen Parameter verändert werden, erhält man eine weniger kolumnar strukturierte Schicht. Die Mikrostruktur ist zwar ansatzweise immer noch kolumnar ausgebildet; allerdings ist sie zur Verwendung als Wärmedämmschicht mit höchster Beständigkeit gegenüber thermischer Wechselbeanspruchung nicht mehr gut geeignet.

Eine noch weitere Erhöhung der Förderrate auf Werte grösser als 60 g/min - bewirkt ein vollständiges Verschwinden der kolumnaren Mikrostruktur. Auch eine Erhöhung des Prozessdrucks bzw. des Gasflusses führt zu einem Verschwinden der kolumnare Mikrostruktur. Interessanterweise entsteht eine profilierte Oberfläche mit stark ausgeprägten Erhebungen, wobei sich diese über Erhebungen des Substrats 2 gebildet haben. Auch bei der Schicht 1 in Fig. 1 erkennt man, dass ein ähnlicher Zusammenhang zwischen der anisotropen Mikrostruktur und dem Oberflächenprofil des Substrats 2 besteht: Die länglichen Korpuskeln 10 gehen bevorzugt von Erhebungen des Substrats 2 aus.

Im zweiten Verfahrensschritt erfolgt nun das Verstärken der Schicht 1. Dabei werden durch eine Applikation Kapillarräume 11,12 der Schicht 1 jeweils zumindest teilweise gefüllt, wodurch sich die vorgesehene Funktion der gesamten Schicht 1 und insbesondere die Erosionsbeständigkeit der Wärmedämmschicht ganz erheblich verbessern lässt. Dabei wird als Verstärkungsmittel 6 eine Flüssigkeit verwendet, die aus einem Lösungsmittel und mindestens einem darin enthaltenen Salz eines Metalls besteht, das thermisch in ein Metalloxid umwandelbar ist. Es wird das Verstärkungsmittel 6 auf die Oberfläche der Schicht aufgetragen. Ferner wird - nach Abwarten einer Penetration in die Kapillarräume 11,12 - das Lösungsmittel unter einer Wärmezufuhr bei zunehmender Temperatur abgedampft und es erfolgt die Bildung des Oxids, beispielsweise dadurch, dass das Metall bei einer erhöhten Temperatur in das Metalloxid 7 überführt wird.

Die Wahl des geeigneten Metalls im Verstärkungsmittel 6 hängt von dem im ersten Verfahrensschritt verwendeten Beschichtungsmaterial für die LPPS-TF-Schicht ab. Für solche LPPS-TF-Schichten kann beispielsweise eines der folgenden keramischen Materialien oder ein Gemisch dieser Materialien verwendet werden; nämlich Oxide der Metalle Me = Zr, Ce, Y, Al oder Ca. Als Verstärkungsmittel 6 können - den Metallen Me entsprechend - wässrige Lösungen der Nitrate Me(NO₃)ₓ verwendet werden, mit x = 2 für Ca und x = 3 für Zr, Ce, Y oder Al. Die Metallnitrate sind in der Regel als kristalline Hydrate erhältlich, beispielsweise Ce(NO₃)₃•6H₂O, die gut in Wasser löslich sind. Schwermetallnitrate zersetzen sich bei erhöhten Temperaturen in die entsprechenden Oxide (beispielsweise Ce₂O₃) unter gleichzeitiger Bildung von gasförmigem NO₂. Die Umwandlungstemperatur, bei der sich die Oxidbildung ergibt, liegt zwischen rund 200°C bis 350°C. Mit Erhöhung der Temperatur reduziert sich die Behandlungszeit (beispielsweise 15 min bei 350°C, 10 min bei 400°C). Für das Verstärkungsmittel 6 eignen sich ferner Metallsalze von Co, Mn, Mg, Sr, Ti, Ni, La,Sc und/oder eines Lanthanids, insbesondere Ce, Eu, Gd, Yb, Nd, Dy.

Im hier beschriebenen Beispiel (Fig. 1) ist die Schicht 1 als Wärmedämmschicht mit kolumnarer Struktur wie bereits erwähnt aus einem pulverförmigen, keramischen Material - nämlich YSZ, d.h. Zirkoniumoxid ZrO₂, das mit Yttrium Y stabilisiert ist - hergestellt. Konkret handelt es sich um ZrO₂-8%Y₂O₃, das mittels LPPS-TF zu einer TBC-Schicht mit kolumnarer Struktur gebildet worden ist. Bei diesem Beschichtungsmaterial kann als geeignetes Verstärkungsmittel eine wässrige Lösung gewählt werden, die sowohl ein Zirkoniumsalz als auch ein Yttriumsalz enthält, beispielsweise die jeweiligen Nitrate. Dabei wird der Zirkonium- und der Yttriumsalzgehalt so gewählt, dass bei der Oxidierung Zirkoniumoxid mit 8% (Gewichtsprozent) Yttriumoxid entsteht, also im wesentlichen die gleiche Zusammensetzung, die auch als Beschichtungsmaterial verwendet wird. Dabei liegt Yttrium in fester Lösung (solid solution) im Zirkoniumoxid vor, welches als tetragonale Phase oder gegebenenfalls auch als kubische Phase ausgebildet ist.

Als Verstärkungsmittel 6 wird also eine Flüssigkeit verwendet, die ein Lösungsmittel und mindestens ein darin enthaltenenes Metall Me umfasst, das thermisch in ein Metalloxid umwandelbar ist. Die Metalle Me liegen z.B. in Form von Kationen vor; die entsprechenden Anionen sind anorganische Verbindungen, beispielsweise Nitrat NO³⁻, oder organische Verbindungen, beispielsweise Alkoholate und Acetate. Werden Alkoholate verwendet, so werden mit Vorteil Chelat-Liganden wie beispielsweise Acetylacetonat zugesetzt, welche die bezüglich Luftfeuchtigkeit bestehende Hydrolyseempfindlichkeit der Alkoholate stark erniedrigen. Dadurch wird ein Ausflocken der Oxide beim Verstärkungsvorgang verhindert. Das Verstärkungsmittel 6 wird auf die Oberfläche der Schicht 1 aufgetragen. Aufgrund von Kapillarkräften dringt es in die Kapillarräume 11, 12 ein: Nach Abwarten der Penetration des Verstärkungsmittels 6 in die Kapillarräume 11, 12 erfolgt ein Wärmeeintrag: Unter einer Wärmezufuhr bei zunehmender Temperatur wird das Lösungsmittel des Verstärkungsmittels 6 abgedampft; bei einer erhöhten Temperatur wird das Metall Me oxidiert (Me = Zr wird zu ZrO₂ oxidiert; Y wird zu Y₂O₃ oxidiert, die Nitrationen reagieren zu NO₂).

Das Verstärkungsmittel 6 ist mit Vorteil eine wässrige Lösung, die ein Salz des oxidierbaren Metalls Me gelöst enthält. Das oxidierte Metall ist vorzugsweise in Wasser unlöslich. Das Metallsalz ist mit Vorzug ein Nitrat oder Acetat (oder ein Gemisch) der Metalle Me = Co, Mn, Mg, Ca, Sr, Y, Zr, Al, Ti, Ni, La, Sc und/oder eines Lanthanids, insbesondere eines der Lanthanide Ce, Eu, Yb, Nd, Dy oder Gd. Das Verstärkungsmittel 6 ist mit Vorteil eine gesättigte, feststofffreie Lösung, deren Viskosität bei 20°C kleiner als 150 mPa s, vorzugsweise kleiner als 35 mPa s ist. Umfasst das Verstärkungsmittel mehrere Metalle, so ist vorzugsweise das eine Metall in fester Lösung (solid solution) mit dem oder den anderen Metall(en).

Ferner kann es vorteilhaft sein, dem Verstärkungsmittel 6 ein Tensid zugegeben, mit dem der Benetzungswinkel und die Oberflächenspannung dieser Flüssigkeit bezüglich dem Material der Schicht 1 geeignet reduziert wird, so dass sich eine möglichst grosse Penetrationstiefe ergibt, auch in die zerfransten Randbereiche (siehe Fig. 5).

Auch kann es vorteilhaft sein, wenn das Verstärkungsmittel ferner ein Oxidationsmittel enthält, um das Metall oder die Metalle zu oxidieren.

Das Auftragen des Verstärkungsmittels 6 kann auf verschiedene Weise erfolgen, beispielsweise durch Besprühen, Bepinseln oder Tauchen bzw. Eintauchen der Schicht 1 in ein geeignetes Bad. Die Penetration des Verstärkungsmittels 6 kann vorteilhaft durch Beaufschlagung mit Ultraschall beeinflusst bzw. unterstützt werden.

Bei dem anschliessenden Wärmeeintrag kann die Wärmezufuhr in einem thermischen Ofen, in einem Mikrowellenofen, mit einem Wärmestrahler, insbesondere einem Karbonstrahler mit einem Wellenlängenbereich von 2 - 3.5 µm, und/oder mit einer Flamme, insbesondere einer Flamme eines Plasmabrenners durchgeführt werden.

Der Wärmeeintrag kann beispielsweise gemäss einem vorgegebenen zeitlichen Temperaturprofil durchgeführt werden. Das Temperaturprofil umfasst Intervalle, innerhalb derer die Temperatur jeweils zumindest angenähert auf einem Niveau gehalten wird. Auf dem ersten oder den ersten beiden Niveaus, die beispielsweise im Bereich von 100°C bis 150°C liegen, wird Lösungsmittel - hier Wasser - abgedampft. Das Abdampfen erfolgt auf dem ersten Niveau bei einer Temperatur T, bei der sich keine Dampfblasen bilden. Solche Blasen würden einen Teil des Verstärkungsmittel 6 wieder aus den Kapillarräumen 11, 12 hinaus treiben. Auf einem weiteren - höheren - Niveau wird die Schicht 1 ausgehärtet; beispielsweise bei einer Temperatur zwischen 250°C und 400°C. Dabei wird das Metall Me bei einer Temperatur oxidiert, die grösser als eine von dem oxidierbaren Metall Me abhängigen Umwandlungstemperatur ist.

Während dieser Wärmebehandlung verringert sich üblicherweise das Gewicht der Schicht 1 aufgrund von sich verflüchtigenden Bestandteilen des Verstärkungsmittels 6 und der Umwandlung.

Für das Verstärken ist es im allgemeinen vorteilhaft, ein mehrmaliges Wiederholen des zweiten Schritts des erfindungsgemässen Verfahrens, nämlich der Verstärkungs-Applikation durchzuführen. Dabei erfolgt jeweils einen Auftragen des Verstärkungsmittels 6 und der Wärmeeintrag zum Bilden des Oxids des Metalls Me.

Insbesonders für eine möglichst hohe Beständigkeit der mittels LPPS-TF erzeugten TBC-Schicht mit kolumnarer Struktur gegen Erosion hat es sich als besonders günstig erwiesen, wenn der zweite Schritt, nämlich die Verstärkung mindestens dreimal, vorzugsweise genau dreimal, durchgeführt wird.

In der Regel wird beim Wiederholen des Verstärkungsschritts immer das gleiche Verstärkungsmittel 6 verwendet. Es ist aber auch möglich, bei einer oder mehreren Verstärkungen - insbesondere bei einer abschliessenden Verstärkung - ein anderes Verstärkungsmittel vorzusehen.

Je nach Anwendung kann es vorteilhaft sein, wenn nach dem einmaligen oder mehrmaligen Durchführen des zweiten Verfahrensschritts, also der Verstärkung, noch eine Wärmebehandlung der Schicht 1 zum Sintern erfolgt. Diese Wärmebehandlung erfolgt bei einer höheren Temperatur, beispielsweise bei mindestens 800°C und vorzugsweise bei einer Temperatur, die der Betriebstemperatur der Schicht 1 entspricht.

Dabei hat es sich gezeigt, dass die Erosionsbeständigkeit der Wärmedämmschicht 1 im zeitlichen Verlauf dieser Wärmebehandlung zunächst abnimmt und dann wieder zunimmt. Daher wird diese Wärmebehandlung vorzugsweise über mehrere, beispielsweise etwa zehn Stunden durchgeführt. Je nach Anwendungsfall kann diese Wärmebehandlung durch den Betrieb des Bauteils, welches die Wärmedämmschicht aufweist, erfolgen. Wird beispielsweise eine Turbinenschaufel mit der Wärmedämmschicht 1 versehen so kann die Wärmebehandlung zum Sintern vor Inbetriebnahme der Turbine erfolgen oder durch den Betrieb der Turbine in den ersten Stunden nach ihrer Inbetriebnahme.

In Fig. 2 ist schematisch ein wärmedämmendes Schichtsystem dargestellt, das mit Hilfe eines erfindungsgemässen Verfahrens hergestellt wurde. Das Schichtsystem ist mittels LPPS-Dünnfilm-Prozessen auf einem Grundkörper 3
- beispielsweise eine Turbinenschaufel - aufgebracht. Dieses Schichtsystem setzt sich zusammen aus einer Sperrschicht 3a, einer Heissgaskorrosionsschutzschicht 4 und einer erfindungsgemäss aufgebrachten Wärmedämmschicht 1 auf keramischer Basis. Zwischen der Heissgaskorrosionsschutzschicht 4 und der Wärmedämmschicht 1 kann - nicht dargestellt - zusätzlich eine Schutzschicht auf oxidischer Basis vorgesehen sein.

Die aus der Sperrschicht 3a und der Heissgaskorrosionsschutzschicht 4 bestehende Grundschicht hat eine Schichtdicke, deren Wert zwischen 50 und 200 µm, vorzugsweise 100 µm ist. Für die Sperrschicht 3a wird beispielsweise eine NiAl- oder NiCr-Legierung auf den Grundkörper 3 abgeschieden, der aus einer Ni- oder Co-Basislegierung bestehen kann. Die Heissgaskorrosionsschutzschicht 4 besteht insbesondere zumindest teilweise aus einem Metallaluminid oder einer MeCrAlY-Legierung, wobei Me eines der Metalle Fe, Co oder Ni bedeutet. Die Grundschicht 3a, 4 bildet das Substrat der Wärmedämmschicht 1, die erfindungsgemäss hergestellt und verstärkt bzw. imprägniert ist und somit eine kolumnare Mikrostruktur aufweist. Die Teilschichten des Schichtsystem können bei Bedarf alle durch LPPS-Dünnfilm-Prozesse in einem einzigen Arbeitszyklus ohne Unterbruch aufgebracht werden, oder auch in mehreren aufeinanderfolgenden Arbeitsschritten aufgebracht werden. Nach dem Aufbringen kann das Schichtsystem als Ganzes wärmebehandelt werden.

Das erfindungsgemässe Verfahren lässt sich dazu anwenden, Bauteile, die hohen Prozesstemperaturen ausgesetzt werden, mit einem wärmedämmenden Schichtsystem zu beschichten oder mit einer Wärmedämmschicht mit kolumnarer Struktur zu versehen. Solche Bauteile sind beispielsweise Komponenten einer stationären Gasturbine oder eines Flugzeugtriebwerks: nämlich Turbinenschaufeln, insbesondere Leit- oder Laufschaufeln, oder auch heissgasbeaufschlagbare Komponenten, z. B. ein Hitzeschild.

Fig. 3 zeigt als ein Anwendungsbeispiel in einer sehr vereinfachten Darstellung ein Segment einer Turbine, das gesamthaft mit dem Bezugszeichen 50 bezeichnet ist. Fig. 4 zeigt dieses Segment 50 in einer Schnittdarstellung, wobei der Schnitt parallel zu einer in Fig. 3 mit 51 bezeichneten Grundplatte erfolgt.

Die Turbine, beispielsweise eine Dampfturbine, eine stationäre Gasturbine oder ein Flugtriebwerk umfasst üblicherweise mehrere rotierende Laufräder und stationäre Leitelemente. Sowohl die Laufräder als auch die Leitelemente umfassen jeweils eine Vielzahl von Turbinenschaufeln 52. Die Turbinenschaufeln 52 können jeweils einzeln mit ihrem Fuss auf einer gemeinsamen Achse der Turbine montiert sein oder sie können in Form von Segmenten vorgesehen sein, die jeweils mehrere Turbinenschaufeln 52 umfassen. Diese Ausgestaltung wird häufig als Cluster-Vane-Segment oder je nach Anzahl der Turbinenschaufeln als Double-Vane-Segment, Triple-Vane-Segment usw. bezeichnet.

In Fig. 3 und in Fig. 4 ist in stark vereinfachter Darstellung ein solches Segment 50 einer Gasturbine dargestellt, welches zwei Turbinenschaufeln 52 umfasst, die sich jeweils von der Grundplatte 51 bis zu einer Deckplatte 53 erstrecken. Das Segment 50 kann einstückig sein oder aus mehreren Einzelteilen bestehen. Auf die Darstellung an sich bekannte Details, wie beispielsweise Kühlluftbohrungen oder -kanäle ist in den Fig. 3 und 4 aus Gründen der besseren übersicht verzichtet worden.

Diese Turbinenschaufeln 52 bzw. die Segmente 50 werden häufig mit Wärmedämmschichten 100 geschützt. Es ist auch bekannt, dass die darin enthaltenen Wärmedämmschichten so ausgestaltet sind, dass sie eine kolumnare Struktur bzw. Mikrostruktur aufweisen. Es hat sich jedoch in der Praxis gezeigt, dass bisher bekannte LPPS-TF Wärmedämmschichten mit kolumnarer Mikrostruktur nur eine vergleichsweise geringe Beständigkeit gegenüber Erosion aufweisen und daher insbesondere in schwierigen Umgebungen wie beispielsweise sandhaltiger Luft einen sehr starken und schnellen Verschleiss aufweisen. Gerade hier schafft die Erfindung Abhilfe, denn es hat sich überraschenderweise gezeigt, dass sich bei Wärmedämmschichten mit kolumnarer Struktur bzw. Mikrostruktur, die mittels LPPS-TF thermisch gespritzt werden, durch den zweiten Verfahrensschritt, nämlich das Verstärken, durch zumindest teilweises Auffüllen der Kapillarräume eine deutliche Verbesserung der Erosionsbeständigkeit erzielen lässt, beispielsweise um einen Faktor 7.

Dies ist insofern überraschend als dass man bisher davon ausgegangen ist, dass bei Wärmedämmschichten mit kolumnarer Mikrostruktur die Zwischenräume zwischen den länglichen Korpuskeln, den Stängeln, nicht ganz oder teilweise gefüllt werden dürfen, um die Dehnungstoleranz gegenüber den thermischen Wechselbelastungen nicht zu gefährden.

Ein weiterer Vorteil des LPPS-TF-Verfahrens besteht darin, dass mit diesem Verfahren auch in Schattenbereichen beschichtet werden kann. Bei Grundkörpern wie beispielsweise dem Segment 50 (Fig. 3 und Fig. 4) existieren geometrische Schattenbereiche oder versteckte bzw. abgedeckte Bereiche, die beim Plasmaspritzen nicht direkt - im geometrischen Sinne - mit dem Prozessstrahl beaufschlagt werden können. Häufig ist es so, dass solche Bereiche auch durch eine Rotation des Grundkörpers im Prozessstrahl oder durch eine andere Relativbewegung zwischen Prozessstrahl und Grundkörper nicht erreicht werden können.

Mit dem LPPS-TF-Verfahren kann auch in solchen Bereichen eine Beschichtung hergestellt werden, die sich im geometrischen Schatten des Prozessstrahls befinden, also nicht in der Sichtlinie des Prozessstrahls. Mit diesem Verfahren ist es folglich möglich, um Ecken, Kanten und Rundungen herum zu beschichten.

Dies ist insbesondere vorteilhaft für die Beschichtung von Turbinenschaufeln von Gasturbinen und speziell für Segmente solcher Turbinen, die zwei oder mehr Turbinenschaufeln umfassen.

Somit ist es beispielsweise möglich, dass die Turbinenschaufeln nicht mehr einzeln sondern in grösseren Clustern beschichtet werden können.

Ein zusätlicher Vorteil des erfindungsgemässen Verfahrens bzw. der damit erzeugten Schicht besteht darin, dass insbesondere der zweite Schritt, nämlich die Verstärkung der Schicht durch Füllen der Kapillarräume, eine Verbesserung des Schutzes gegen Schäden mit sich bringt, die durch CMAS verursacht werden. Die CMAS-Problematik ist insbesondere in der Turbinenindustrie bekannt. CMAS ist eine bei relativ niedrigen Temperaturen schmelzende Verbindung von Calcium-, Magnesium-, Aluminium- und Siliziumoxiden, die sich in Poren oder sonstigen Kapillarräumen einlagern kann und Erosion bzw. das Abplatzen (spallation) von Teilen der Schicht verursachen kann. Da erfindungsgemäss die Kapillarräume aufgefüllt werden resultiert ein Schutz gegen CMAS. Insbesondere wird die Ausbildung von CMAS verhindert bzw. deutlich verringert. Des weiteren kann durch die Wahl eines geeigneten Verstärkungsmittels 6 erreicht werden, dass das Verstärkungsmittel 6 bzw. die daraus gebildeten Oxide mit dem geschmolzenen CMAS wechselwirken und dabei Verbindungen bilden, die erst bei deutlich höheren Temperaturen schmelzen.

## Patentansprüche

1. Verfahren zum Herstellen einer funktionalen Schicht, bei welchem in einem ersten Schritt mittels eines Plasmaspritzverfahrens ein Beschichtungsmaterial in Form eines Pulverstrahls auf eine Oberfläche eines Substrats (2) aufgespritzt wird, wobei das Beschichtungsmaterial bei einem niedrigen Prozessdruck, der kleiner als 10 000 Pa ist, in ein den Pulverstrahl defokussierendes Plasma injiziert und dort teilweise oder vollständig geschmolzen wird, wobei ein Plasma mit ausreichend hoher spezifischer Enthalpie erzeugt wird, sodass ein substanzieller, mindestens 5 Gew-% betragender Anteil des Beschichtungsmaterials in die Dampfphase übergeht und auf dem Substrat eine anisotrop strukturierte Schicht (1) entsteht, wobei längliche Korpuskeln (10), die eine anisotrope Mikrostruktur bilden, weitgehend senkrecht zur Oberfläche des Substrats (2) stehend ausgerichtet sind und materialarme Übergangsbereiche (11, 12) die Korpuskeln gegeneinander begrenzen, **dadurch gekennzeichnet dass** in einem zweiten Schritt zum Verstärken der Schicht Kapillarräume (11,12) der Schicht (1) gefüllt werden wobei als Verstärkungsmittel (6) eine Flüssigkeit verwendet wird, die mindestens ein darin enthaltenes Salz eines Metalls (Me) umfasst, das thermisch in ein Metalloxid umwandelbar ist, wobei das Verstärkungsmittel (6) auf die Oberfläche der Schicht (1) aufgetragen wird, und - nach Abwarten einer Penetration in die Kapillarräume - ein Wärmeeintrag erfolgt zur Bildung eines Oxids.

2. Verfahren nach Anspruch 1, bei welchem der zweite Schritt, nämlich das Auftragen des Verstärkungsmittels (6) und der Wärmeeintrag zur Bildung des Oxids mehrmals, insbesondere dreimal, durchgeführt wird.

3. Verfahren nach einem der Ansprüche 1 oder 2, bei welchem das Verstärkungsmittel (6) eine wässrige Lösung ist, die ein Salz des oxidierbaren Metalls (Me) gelöst enthält, und das Metallsalz mit Vorzug ein Nitrat oder Acetat der Metalle Co, Mn, Mg, Ca, Sr, Y, Zr, Al, Ti, Ni, La, Sc und/oder eines Lanthanids ist, insbesondere eines der Lanthanide Ce, Eu, Yb, Nd, Dy oder Gd.

4. Verfahren nach einem der Ansprüche 1 bis 3, **dadurch gekennzeichnet, dass** die Wärmezufuhr in einem thermischen Ofen, in einem Mikrowellenofen, mit einem Wärmestrahler, insbesondere einem Karbonstrahler mit einem Wellenlängenbereich von 2 - 3.5 µm, und/oder mit einer Flamme durchgeführt wird.

5. Verfahren nach einem der Ansprüche 1 bis 4, **dadurch gekennzeichnet, dass** die Wärmezufuhr in einer inerten Atmosphäre oder im Vakuum durchgeführt wird.

6. Verfahren nach einem der Ansprüche 1 bis 5, bei welchem die anisotrop strukturierte Schicht (1) eine Wärmedämmschicht ist, die beispielsweise in einer Gasturbine zur Anwendung kommt, und deren Schichtdicke Werte zwischen 20 und 2000 µm, vorzugsweise Werte von 100 µm bis 500 µm aufweist.

7. Verfahren nach einem der vorangehenden Ansprüche, wobei in dem Plasmaspritzverfahren:
a) für den Prozessdruck ein Wert zwischen 20 und 2000 Pa, vorzugsweise zwischen 100 und 500 Pa, gewählt wird und die spezifische Enthalpie des Plasmas durch Abgabe einer effektiven Leistung erzeugt wird, die insbesondere im Bereich von 40 bis 80 kW liegt,
b) der Pulverstrahl in das Plasma mit einem Fördergas injiziert wird, das Prozessgas ein Gemisch von Inertgasen ist, insbesondere ein Gemisch von Argon Ar und Helium He, wobei das Volumenverhältnis von Ar zu He vorteilhafterweise im Bereich von 2 : 1 bis 1 : 4 liegt, und der Gesamtgasfluss im Bereich von 30 bis 150 SLPM liegt, wobei optional das Gemisch zusätzlich Wasserstoff H oder Stickstoff N enthalten kann
c) die Pulverförderrate zwischen 2 und 80 g/min, vorzugsweise zwischen 10 und 40 g/min liegt, und
d) vorzugsweise das Substrat während des Materialauftrags mit Dreh- oder Schwenkbewegungen relativ zu einer Wolke des defokussierten Pulverstrahls bewegt wird.

8. Verfahren nach einem der vorangehenden Ansprüche, bei welchem zur Beschichtung ein Material verwendet wird, das oxidkeramische Komponenten enthält, wobei eine solche Komponente insbesondere ein mit Magnesium, Calcium, Scandium, Yttrium, Cerium, Dysprosium oder anderen Selten Erden stabilisiertes Zirkoniumoxid ist und der als Stabilisator verwendete Stoff in Form eines Oxids der genannten Seltenen Erden oder des genannten Magnesiums oder des genannten Calciums dem Zirkoniumoxid beigefügt ist.

9. Verfahren nach einem der vorangehenden Ansprüche, bei welchem nach dem einmaligen oder mehrmaligen Durchführen des zweiten Schritts eine Wärmebehandlung zum Sintern erfolgt, die vorzugsweise bei mindestens 800°C erfolgt.

10. Verfahren nach einem der vorangehenden Ansprüche, bei welchem das Substrat (2) eine Komponente einer stationären Gasturbine oder eines Flugtriebwerks ist, nämlich eine Turbinenschaufel (52), insbesondere eine Leit- oder Laufschaufel, oder ein Segment (50), welches mindestens zwei Turbinenschaufeln (2) umfasst oder eine heissgasbeaufschlagbare Komponente, beispielsweise ein Hitzeschild.

11. Bauteil mit einer funktionalen Schicht, **dadurch gekennzeichnet, dass** die Schicht mit einem Verfahren gemäss einem der vorangehenden Ansprüche hergestellt ist, insbesondere Komponente einer stationären Gasturbine oder eines Flugtriebwerks, nämlich eine Turbinenschaufel (52), insbesondere eine Leit- oder Laufschaufel, oder ein Segment (50), welches mindestens zwei Turbinenschaufeln umfasst oder eine heissgasbeaufschlagbare Komponente, beispielsweise ein Hitzeschild.
